# EUROPEAN PATENT SPECIFICATION

(11) **EP 4 348 423 B1**
(45) Date of publication and mention of the grant of the patent: **24.12.2025**
(21) Application number: 21730863.4
(22) Date of filing: 01.06.2021
(51) Int. Cl.: G06F 9/50, G06F 11/30, G06F 11/34, G06N 20/00, G06N 20/20

(54) **A COMPUTER SOFTWARE MODULE ARRANGEMENT, A CIRCUITRY ARRANGEMENT, AN ARRANGEMENT AND A METHOD FOR IMPROVED AUTONOMOUS ADAPTATION OF SOFTWARE MONITORING OF REALTIME SYSTEMS**
COMPUTERSOFTWAREMODULANORDNUNG, SCHALTUNGSANORDNUNG, ANORDNUNG UND VERFAHREN ZUR VERBESSERTEN AUTONOMEN ANPASSUNG DER SOFTWAREÜBERWACHUNG VON ECHTZEITSYSTEMEN
AGENCEMENT DE MODULE LOGICIEL INFORMATIQUE, AGENCEMENT DE CIRCUITS, AGENCEMENT ET PROCÉDÉ D'ADAPTATION AUTONOME AMÉLIORÉE DE SURVEILLANCE DE LOGICIEL DE SYSTÈMES EN TEMPS RÉEL

(43) Date of publication of application: 10.04.2024
(73) Proprietor: Telefonaktiebolaget LM Ericsson (publ), 164 83 Stockholm (SE)
(72) Inventor: MILLNERT, Victor, 22350 Lund (SE); ÅBERG, Patrik, 24732 Södra Sandby (SE)
(74) Representative: Zacco Sweden AB
(86) International application number: PCT/EP2021/064701
(87) International publication number: WO 2022/253417

(56) References cited:
- GAMBI ALESSIO ET AL: "Kriging-Based Self-Adaptive Cloud Controllers", IEEE TRANSACTIONS ON SERVICES COMPUTING, IEEE, USA, vol. 9, no. 3, 1 May 2016 (2016-05-01), pages 368 - 381, XP011613099, ISSN: 1939-1374, [retrieved on 20160608], DOI: 10.1109/TSC.2015.2389236
- MILLNERT VICTOR ET AL: "Achieving Predictable and Low End-to-End Latency for a Network of Smart Services", 2018 IEEE GLOBAL COMMUNICATIONS CONFERENCE (GLOBECOM), IEEE, 9 December 2018 (2018-12-09), pages 1 - 7, XP033519495, DOI: 10.1109/GLOCOM.2018.8647332
- CHEN WEI ET AL: "A QoS Guarantee Framework for Cloud Services Based on Bayesian Prediction", 2015 THIRD INTERNATIONAL CONFERENCE ON ADVANCED CLOUD AND BIG DATA, IEEE, 30 October 2015 (2015-10-30), pages 117 - 124, XP032883776, ISBN: 978-1-4673-8537-4, [retrieved on 20160317], DOI: 10.1109/CBD.2015.28

## Description

### TECHNICAL FIELD

The present invention relates to an arrangement, an arrangement comprising computer software modules, an arrangement comprising circuits, and a method for providing an improved manner of autonomous adaptation of software monitoring of real-time systems, and in particular to an arrangement, an arrangement comprising computer software modules, an arrangement comprising circuits, and a method for providing an improved manner of autonomous adaptation of monitoring (surveillance and control) of a cloud based system which supports real-time services (RTS).

### BACKGROUND

As computer applications grow in complexity so does the requirement for processing power. As a result, more and more services are becoming cloud based, relying on networked resources offered by a provider of computational resources. As is known cloud computing is the delivery of computing services, such as servers, storage, databases, and networking, over the a network such as the Internet ("the cloud") to offer flexible resources where a user typically only pays for the cloud services used. The services are thus provided as use of computational resources such as processing power (for example processor cores and processing time), memory access (space and access speed) and bandwidth to mention a few examples.

One example field where cloud computing is growing is real-time services. As the name suggests the timing of such services is important, where the services require a response in real-time and are thus sensitive to delays. Typical examples of acceptable response times are measured in milliseconds or even microseconds. It is thus important that a service or system or services, especially as regards real-time services have access to sufficient computational resources to provide the required response times.

In order to ensure that a service has access to sufficient computational resources, several monitoring systems (including surveillance and/or control) are proposed. The monitoring systems monitor the performance of one or more services and based on the performance provides the required computational resources.

The state-of-the-art solutions for providing such monitoring involves developing mechanistic models, both statistical and dynamic ones, which allow a system to predict the performance of the real-time services. For instance, such a model might take as input the CPU load, the memory usage, and the rate by which traffic is entering the service in order to predict the processing capacity of the node, and in turn predict whether any violation of a real-time requirement might occur. These models would then be used in conjunction with a control unit which decides whether to change some parameters or functionality of the real-time services, in order to affect its real-time performance and thereby mitigate a risk of violating a real-time requirement.

One example of such monitoring is given in the patent application published as US2015286507A1 which discloses a method, node and computer program for a resource controller node for enabling automatic adaptation of the size of a pool of resource units, the resource units needed for operation of an application in a computer environment.

As in that system, contemporary networks of real-time services can be huge, wherein the usually simple step of collecting the data is no longer a simple. Oftentimes, the services grow in complexity over time, simply by being scaled up.

A key feature with prior art surveillance- and control systems is that they are based on a deep learning framework for predicting future real-time performance of the real-time system(s). As is the case with any deep learning framework, good data is needed in order to train the network to achieve an acceptable level of accuracy for the predictions. A problem with the existing solutions is the fundamental nature that whenever one controls/changes the configuration (e.g., scale the CPU, storage, VNFs, etc.) of the underlying system, one will need to account for this while generating the prediction model. The reason is that when one scales the configuration it will also change the real-time performance (e.g., processing a queue will be quicker). Hence, in the previously proposed solutions there has been a need to generate this data and train the prediction model a priori and off-line.

There is thus a need for a more efficient manner of both providing software monitoring of real-time systems and for adapting the models for such monitoring.

The publication "Kriging-Based Self-Adaptive Cloud Controllers" by Gambi Alessio et al. focuses on controllers for cloud application elasticity and propose a novel solution for self-adaptive cloud controllers based on Kriging models.

The publication "Achieving Predictable and Low End-to-End Latency for a Network of Smart Services" by Victor Millnert et al. focuses on deriving a mathematical framework that models a network of smart services that is hosting several automation applications.The publication "A QoS Guarantee Framework for Cloud Services Based on Bayesian Prediction" by Wei Chen et al. proposes a QoS guarantee framework for cloud services and the Bayesian prediction method is used to predict QoS of cloud service.

### SUMMARY

The invention is set out in the appended set of claims. The dependent claims set out particular embodiments.

The inventors have realized that an automated monitoring of the actual monitoring of the real-time services would indeed be beneficial as it would allow for detecting that a model utilized is not providing good predictions and based on this, retrain the model dynamically to adapt to any changes in the underlying system or use thereof.

The inventors have also realized that as the monitoring is to be automated, the exact nature of the real-time data to be collected need not be readable to a human monitor and the inventors further realized that by insightfully utilizing opaque services, that is services that reports performance metrics of an unknown format or alternatively in a normalized format, wherein the performance metrics have no real or at least clear meaning to the monitoring may be used to provide for a faster data collection and that is easier and/or faster to adapt to changes.

The inventors have also realized that there is an inherent problem in prior art monitoring systems in that as systems grow larger, while maintaining the same timing requirements especially for real-time services, any adaptations of the computational resources for a service(s) may be too slow, thereby affecting the performance of the service. In this regard, it can again be pointed out that real-time services operate on timing requirements of milliseconds and microseconds, whereas resource allocations operate on timings of hundreds of seconds. The inventors have realized that in order to preempt such allocations, the monitoring may reserve resources ahead of time based on the prediction into a standby pool from which any changes in allocations may be drawn.

As will be shown below, this has provided an extremely simple and elegant manner for providing automated monitoring and also training of the monitoring.

The inventors have further realized that traditional analysis tools are not advanced enough to handle the sizes of real-time service systems, which may be vast indeed, especially if implemented as cloud services. The inventors have therefore realized that the most advanced analysis tools available are aimed at image analysis, and are thus proposing to insightfully provide the performance metrics as an image(s), which image(s) may be analyzed using image analysis tools, such as the many various neural network tools and techniques commonly used for image analysis, for example through the use of Convoluted Neural Networks (CNN).

According to one aspect a software monitoring arrangement arranged to monitor a software system comprising one or more of computational resources, wherein the software system is configured to execute one or more services each utilizing a portion of the one or more of computational resources and the software system further comprises a live capacity controller configured to receive one or more first performance metrics from the one or more services and to assign the portion of the computational resources to the one or more services based on the first performance metrics, the software monitoring arrangement comprising a controller configured to: receive second performance metrics; execute a state predictor to determine a predicted state of the software system based on the second performance metrics; execute a standby capacity calculator to determine a standby capacity based on the predicted state; and reserve computational resources according to the standby capacity to a standby pool of computational resources enabling the live capacity controller to assign a change in the portion of the computational resources to the one or more services from the standby pool.

The solution may be implemented as a software solution, a hardware solution or a mix of software and hardware components.

In some embodiments the controller is further configured to: execute a performance calculator to determine a prediction performance; execute a compensator calculator to determine a compensator based on the prediction performance; and determine the standby capacity based on the compensator.

In some embodiments the controller is further configured to execute an accuracy calculator to determine a prediction accuracy by comparing the second performance metrics for a specific time period to the previously stored predicted state of the software system for the specific time period, and to determine the prediction performance based on the prediction accuracy.

In some embodiments the controller is further configured to determine the compensator based on a safety factor (k).

In some embodiments the controller is further configured to execute a minimum standby pool calculator to determine a minimum standby pool size based on the predicted state and in response thereto execute the standby capacity calculator to determine the standby capacity based also on the minimum standby pool size.

In some embodiments the controller is further configured to determine the predicted state based on a system model.

In some embodiments the controller is further configured to determine the predicted state based on the system model utilizing a neural network.

In some embodiments the controller is further configured to store the predicted state; store the received performance metrics; and execute a model trainer to train the system model based on the stored predicted states and the stored received performance metrics.

In some embodiments the controller is further configured to determine that the prediction performance falls below a threshold and in response thereto train the system model.

In some embodiments the second performance metrics comprises one or more images representing one or more current states of the one or more services of the software system and wherein the controller is further configured to determine the predicted state of the software system based on image analysis of the one or more images.

In some embodiments the controller is further configured to provide said image analysis to recognize a pattern in the one or more images, which pattern is associated with a known state, wherein the predicted state is determined to be the known state.

In some embodiments the second performance metrics comprises at least one performance metric from a first service of the one or more services, wherein the performance metric from the first service comprises an opaque data entity.

In some embodiments the first performance metrics is at least a subset of the second performance metrics.

In some embodiments the controller is further configured to reserve computational resources according to the standby capacity to the standby pool of computational resources enabling the live capacity controller to assign an increase in the portion of the computational resources to the one or more services.

These embodiments have several benefits including, but not limited to the ones disclosed herein. A few examples of benefits are disclosed below.

The solution allows the system to autonomously learn and adapt the software surveillance- and control in a safe way.

The solution reduces the need to collect and train the deep learning models a priori.

The solution allows the system to autonomously adapt to new characteristics of the real-time system.

By continuously monitoring the prediction performance and re-training the prediction models when necessary, the solution reduces the amount of necessary standby capacity for the system, thereby reducing the cost of running the system.

The solution reduces the amount of resources needed in hot-standby and thereby amounts to significant cost- and resource savings.

The solution thus allows the system to continuously adapt and update the prediction models in a safe way. Along with this, as the model is improved it continuously reduces the amount of resources needed in hot standby.

This invention may be used both within and outside a cloud environment. The intended target use-case is for the real-time cloud; however it can just as well be used in a closed multi-service environment deployed on local stand-alone hardware. One example could be the infotainment system in autonomous cars, actuators and sensors in a manufacturing plant, or in a radio base-station.

According to one aspect a method is provided for automated software monitoring of a software system comprising one or more of computational resources configured to execute one or more services and a live capacity controller configured to receive performance metrics from the one or more services and to assign a portion of the computational resources to the one or more services based on the performance metrics, wherein the method comprises: receiving the performance metrics; determining a predicted state of the software system; determining a standby capacity based on the predicted state; and reserving computational resources according to the standby capacity to a standby pool of computational resources enabling the live capacity controller to assign a change in the portion of the computational resources to the one or more services from the standby pool.

According to one aspect there is provided a computer-readable medium carrying computer instructions that when loaded into and executed by a controller of a software monitoring of real-time services arrangement enables the software monitoring of real-time services arrangement to implement a method according to herein.

According to one aspect there is provided a software component (or module) arrangement according to an embodiment of the teachings herein. The software component arrangement is adapted to be used in a software monitoring of real-time services arrangement as taught herein for automated software monitoring of real-time services as taught herein of a software system comprising a one or more of computational resources configured to execute one or more services and a live capacity controller configured to receive performance metrics from the one or more services and to assign a portion of the computational resources to the one or more services based on the performance metrics, wherein the software component arrangement comprises: a software component for receiving the performance metrics; a software component for determining a predicted state of the software system; a software component for determining a standby capacity based on the predicted state; and a software component for reserving computational resources according to the standby capacity to a standby pool of computational resources enabling the live capacity controller to assign an increase in the portion of the computational resources to the one or more services from the standby pool.

According to one aspect there is provided an arrangement comprising circuitry for software monitoring of real-time services according to an embodiment of the teachings herein. The arrangement comprising circuitry for software monitoring of real-time services is adapted to be used in a software monitoring of real-time services arrangement as taught herein for automated software monitoring of a software system comprising a one or more of computational resources configured to execute one or more services and a live capacity controller configured to receive performance metrics from the one or more services and to assign a portion of the computational resources to the one or more services based on the performance metrics, wherein the software monitoring arrangement comprises: circuitry arranged to receive the performance metrics; circuitry arranged to determine a predicted state of the software system; circuitry arranged to determine a standby capacity based on the predicted state; and circuitry arranged to reserve computational resources according to the standby capacity to a standby pool of computational resources enabling the live capacity controller to assign an increase in the portion of the computational resources to the one or more services from the standby pool.

The teachings herein finds use both within and outside a cloud environment. One intended target use-case is for a real-time cloud; however the teachings herein may equally well be used in a closed multi-service environment deployed on local stand-alone hardware. One example could be the infotainment system in autonomous cars, or actuators and sensors in a manufacturing plant.

Further embodiments and advantages of the present invention will be given in the detailed description. It should be noted that the teachings herein find use in monitoring arrangements in many areas of software monitoring of real-time service systems.

### BRIEF DESCRIPTION OF THE DRAWINGS

Embodiments of the invention will be described in the following, reference being made to the appended drawings which illustrate non-limiting examples of how the inventive concept can be reduced into practice.
Figure 1A shows a schematic view of a software monitoring of real-time services arrangement according to an embodiment of the present invention;
Figure 1B shows a schematic view of a software monitoring of real-time services arrangement according to an embodiment of the present invention;
Figure 2A shows a schematic view of a software monitoring of a software system according to one embodiment of the teachings herein;
Figure 2B shows a schematic view of a software monitoring of a software system according to one embodiment of the teachings herein;
Figures 3 shows a flowchart of a general method according to an embodiment of the present invention;
Figure 4 shows a component view for a software component arrangement according to an embodiment of the teachings herein;
Figure 5 shows a component view for an arrangement comprising circuits according to an embodiment of the teachings herein; and
Figure 6 shows a schematic view of a computer-readable medium carrying computer instructions that when loaded into and executed by a controller of an arrangement enables the arrangement to implement an embodiment of the present invention.

### DETAILED DESCRIPTION

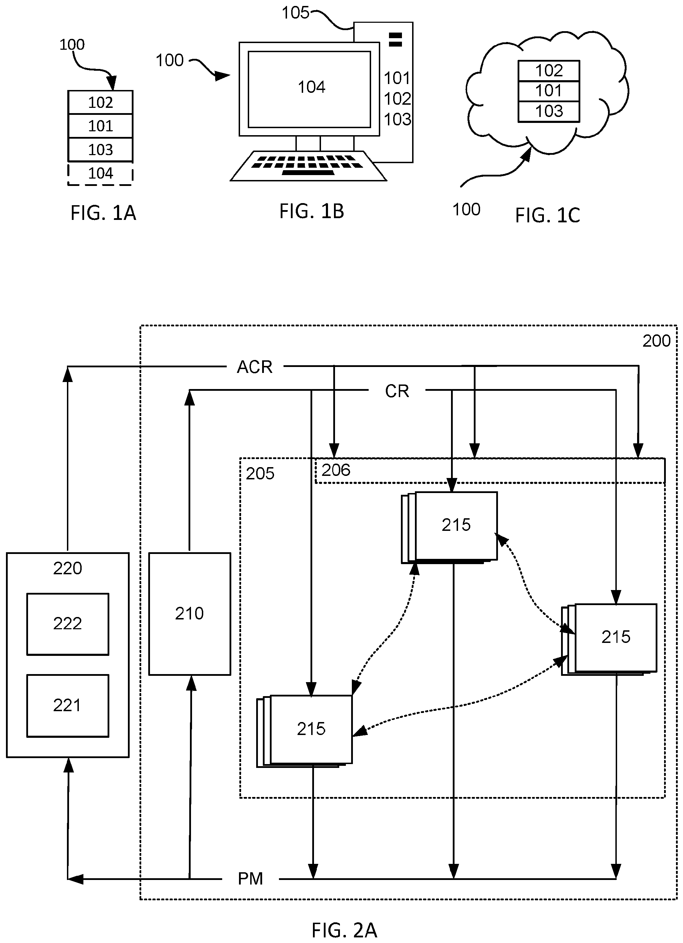

Figure 1A shows a schematic view of a software monitoring of real-time services arrangement 100 according to an embodiment of the present invention. The software monitoring of real-time services arrangement 100 comprises a controller 101 and a memory 102. It should be noted that the software monitoring of real-time services arrangement 100 may comprise a single device, such as a server, or may be distributed across several devices and apparatuses.

The controller 101 is configured to control the overall operation of the software monitoring of real-time services arrangement 100. In one embodiment, the controller 101 is one or more general purpose processors. As a skilled person would understand there are many alternatives for how to implement a controller, such as using Field -Programmable Gate Arrays circuits, AISIC, GPU, etc. in addition or as an alternative. For the purpose of this application, all such possibilities and alternatives will be referred to simply as the controller 101.

The memory 102 is configured to store data and computer-readable instructions that when loaded into the controller 101 indicates how the software monitoring of real-time services arrangement 100 is to be controlled. The memory 102 may comprise one or several memory modules, partitions, allocations, units or devices, but they will be perceived as being part of the same overall memory 102. There may be one memory unit for storing data, one memory for the communications interface (see below) for storing settings, and so on. As a skilled person would understand there are many possibilities of how to select where data should be stored and a general memory 102 for the software monitoring of real-time services arrangement 100 is therefore seen to comprise any and all such memory units for the purpose of this application. As a skilled person would understand there are many alternatives of how to implement a memory, for example using non-volatile memory circuits, such as EEPROM memory circuits, or using volatile memory circuits, such as RAM memory circuits. The memory 102 may also be an allocation of a larger memory partition. For the purpose of this application all such alternatives will be referred to simply as the memory 102.

In one embodiment the software monitoring of real-time services arrangement 100 further comprises a communication interface 103. The communication interface may be wired and/or wireless. The communication interface may comprise several interfaces.

In one embodiment the communication interface comprises a USB (Universal Serial Bus) interface. In one embodiment the communication interface comprises an analog interface, a CAN (Controller Area Network) bus interface, an I2C (Inter-Integrated Circuit) interface, or other interface.

In one embodiment the communication interface comprises a radio frequency (RF) communications interface. In one such embodiment the communication interface comprises a Bluetooth^{™} interface, a WiFi^{™} interface, a ZigBee^{™} interface, a RFID^{™} (Radio Frequency IDentifier) interface, Wireless Display (WiDi) interface, Miracast interface, and/or other RF interface commonly used for short range RF communication. In an alternative or supplemental such embodiment the communication interface comprises a cellular communications interface such as a fifth generation (5G) cellular communication interface, an LTE (Long Term Evolution) interface, a GSM (Global Systéme Mobilé) interface and/or other interface commonly used for cellular communication. In one embodiment the communications interface is configured to communicate using the UPnP (Universal Plug n Play) protocol. In one embodiment the communications interface is configured to communicate using the DLNA (Digital Living Network Appliance) protocol.

In one embodiment, the communications interface 103 is configured to enable communication through more than one of the example technologies given above.

The communications interface 103 may be configured to enable the software monitoring of real-time services arrangement 100 to communicate with services that are part of the (real-time) services for receiving data on (real-time) performance from such (real-time) services. The communications interface 103 may be configured to enable the software monitoring of real-time services arrangement 100 to communicate with a cloud service or other alternative for providing the computational resources to a software system (not shown in figure 1A, but referenced 205 and 200 respectively in figure 2A) for communicating requests for reserving computational resources.

As is indicated in figure 1A, the software monitoring of real-time services arrangement 100 may in some embodiments comprise a user interface 104.

Figure 1B shows a schematic view of one such example of a software monitoring of real-time services arrangement 100 according to an embodiment of the present invention. The software monitoring of real-time services arrangement 100 in this example is a desktop computer or work station 100 comprising a housing 105 in which the controller 101, the memory 102 and the communication interface 103 is housed. The work station is in this example provided with a user interface 104 comprising a display and a keyboard.

Figure 1B shows a schematic view of one such example of a software monitoring of real-time services arrangement 100 according to an embodiment of the present invention. The software monitoring of real-time services arrangement 100 in this example is a cloud service or other network service provided to perform the monitoring, the cloud (or network) thus comprising or providing services for a memory 102, a controller 101 and a communication interface 103 as discussed in the above.

In the following the software monitoring of real-time services arrangement 100 will also be referred to simply as the monitoring arrangement 100. It should be noted that even though the teachings herein are focused on the monitoring of real-time services, the monitoring arrangement 100 may also be used for monitoring other services.

Figure 2A shows a schematic view of functional components of a software monitoring of a software system 200 to be executed on or performed by a software monitoring arrangement 100 according to one embodiment of the teachings herein.

In some embodiments the software system 200 comprises a plurality of services 215 to be monitored. In some embodiments at least some or all of the services 215 are real-time services 215. In this example, three groupings of services are shown, but it should be noted that any number of services may be monitored and that the number of groupings and services in each grouping is probably of a higher number than illustrated in figure 2A, and it should be apparent that this (low) number is only for illustrative purposes.

The real-time services 215 may be connected for sharing data, for cooperating on a task or to be part of a process flow, to mention a few reasons, as indicated by the dotted arrows. As is also shown in figure 2A, the services 215 execute on computational resources 205. As the computational resources are part of a networked or cloud service, they area only shown schematically, but as a skilled person would realize the computational resources 205 may relate to allotted bandwidth, processor cores, processor execution time, memory space, memory access speed and so on to mention a few examples. The computational resources 205 are allocated to the various services 215 based on their predicted requirements by a live controller 210, being a software monitoring module arranged or configured to receive performance metrics from one or more of the services 215, analyze the performance and to allocate computational resources 205 accordingly. As a skilled person would realize, in most cases the live controller only allots or assigns a portion of the computational resources 205 toe a service 205. In figure 2A the allocation CR of (at least a portion of) computational resources 205 is shown as going from the live controller 210 to the respective services 215. It should however be noted that there are many variations on how the allocation is to be done and the illustration in figure 2A is only schematic.

The live controller 210 is, in some embodiments, arranged to operate as per any prior art solution and its internal operations will therefore not be discussed in great detail herein. Suffice to state that the live controller receives performance metrics, analyzes these metrics, possibly based on neural networks or other machine learning algorithm, and allocates computational resources accordingly.

In embodiments where real-time services are monitored the live-capacity controller may be referred to as a real-time capacity controller 210.

In figure 2A there is also shown how a software monitoring arrangement 220 is operatively connected to the software system 200 for monitoring the services 215 of the software system 200. As figure 2A is a schematic view showing functional components it should be noted that the software monitoring component 220 is to be executed by a software monitoring arrangement as in any of figures 1A, 1B or 1C and will thus be referred to by the same terminology; software monitoring arrangement. In some embodiments the software monitoring arrangement 220 is connected to the software system 200 through the communication interface 103 for example for receiving performance metrics from one or more of the services 215. In some embodiments the software monitoring arrangement 220 is connected to the software system 200 by being comprised in the software system 200.

As mentioned above, the software monitoring arrangement 220 receives performance metrics from the one or more of the services 215. It could be noted that the performance metrics received by the live controller 210 are, in some embodiments, different from the performance metrics received by the software monitoring arrangement 220. The live controller 210 is thus seen to receive a first set of performance metrics and the software monitoring arrangement 220 is seen to receive a second set of performance metrics. In some embodiments the first set is a subset of the second set. In some embodiments the first set is the same as the second set. In some embodiments the second set includes performance metrics for all services 215. In some embodiments the second set includes performance metrics for some of the services 215. In some embodiments the second set includes performance metrics for one of the services 215.

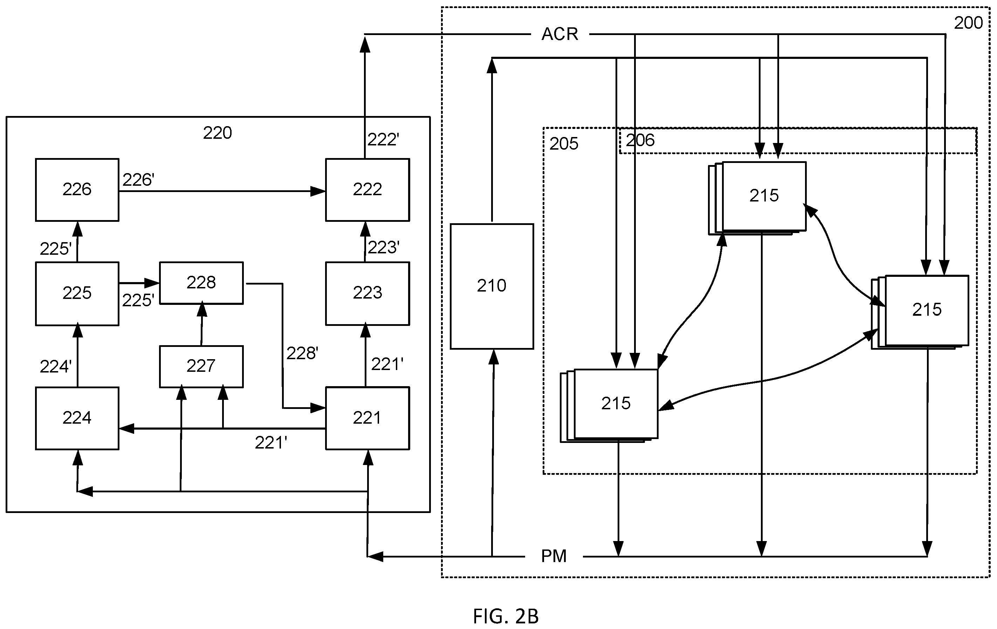

The software monitoring arrangement 220 includes a state predictor 221 that is configured to determine a predicted state 221' of the software system 200 based on the received performance metrics, when executed. The state predictor is in some embodiments, configured to operate based on a model and which model is based on machine learning, such as utilizing neural networks. More details on the state predictor will be given with reference to figure 2B below.

The software monitoring arrangement 220 includes a standby capacity calculator 222 that is configured to determine a standby capacity 222' based on the predicted state 221', when executed.

By monitoring the performance of the software system 200 and predicting a (future) state of the software system 200 representing the (future) requirements of at least some of the services 215 of the software system 200, it is possible to determine a (future) required capacity of computational resources. This in turn, and as the inventors have realized through inventive and insightful reasoning providing a simple and elegant solution, enables for reserving the needed capacity ahead of time so that as the need for the capacity arises, the capacity is already available in a standby pool 206, having been reserved ahead of time. The software monitoring arrangement 220 is thus also configured to reserve computational resources 205 into a standby pool of computational resources 206. In figure 2A this is indicted by the Available Computation Resources ACR being determined for the standby pool 206. It should be noted that the increased cost of reserving resources ahead of time is greatly offset by the increase in computational security achieved in that computational resources will always be need as required. It should also be pointed out that since computational cycles are very short, the time a resource spends in the standby pool 206 without being utilized is minimal.

The live controller 210 is thereby enabled to assign any change in the assigned portion of computational resources 205 for any service(s) 215 quickly and effectively from a standby pool 206 of computational resources.

In some embodiments the change in the assigned portion computational resources 205 for a service 215 relates to an increase in required resources. In some such embodiments such a change causes the software monitoring arrangement 220 to reserve other additional and/or other more powerful resources. In one such embodiment the software monitoring arrangement 220 is configured to reserve computational resources according to the standby capacity to the standby pool 206 of computational resources enabling the real-time capacity controller 210 to assign an increase in the portion of the computational resources 205 to the one or more services 215.

In some embodiments the change in the assigned portion computational resources 205 for a service 215 relates to an adaptation in requirements (for example an increased requirement on bandwidth, while a decreased request on processing power, such as when streaming huge data loads) in required resources. In some such embodiments such a change causes the software monitoring arrangement 220 to reserve other, more suitable, resources (as per the actual case).

In some embodiments the change in the assigned portion computational resources 205 for a service 215 relates to a decrease in requirements (for example a decreased timing requirement) in required resources. In some such embodiments such a change causes the software monitoring arrangement 220 to reserve other less powerful resources, which may save on the overall costs.

Figure 2A thus shows a software monitoring arrangement 100, 220 arranged to monitor a software system comprising one or more of computational resources 205, wherein the software system 200 is configured to execute one or more services 215 each utilizing a portion of the one or more of computational resources 205 and the software system further comprises a live capacity controller 210 configured to receive one or more first performance metrics PM from the one or more services 215 and to assign the portion of the computational resources 205 to the one or more services 215 based on the first performance metrics PM, the software monitoring arrangement 100, 220 comprising a controller 101 configured to: receive second performance metrics PM; execute a state predictor 221 to determine a predicted state 221' of the software system 200 based on the second performance metrics PM; execute a standby capacity calculator 222 to determine a standby capacity 222' based on the predicted state 221'; and reserve computational resources according to the standby capacity to a standby pool 206 of computational resources enabling the live capacity controller 210 to assign a change in the portion of the computational resources 205 to the one or more services 215 from the standby pool.

In some embodiments, the performance metrics represent a current measured states of the software system 200.

Figure 2B shows a schematic view of functional components of a software monitoring of a software system 200 to be executed on or performed by a software monitoring arrangement 100 according to one embodiment of the teachings herein. In many aspects the software monitoring arrangement 220 and the software system 200 of figure 2B are the same as in figure 2A. However, as is shown, additional embodiments of the software monitoring arrangement 220 will be disclosed with reference to figure 2B.

As discussed in the background and in the summary, the inventors have realized several problems regarding errors or inconsistencies in the prediction and scaling of systems. The inventors have further realized, that in due to such changes in the system 200 and/or for errors or inconsistencies in the prediction, the predicted state 221' may not always be (highly) accurate which will lead to an incorrectly apportioned standby pool 206 to be maintained, leading to too few or the wrong computational resources being available and/or computational resources being reserved but never used, thus increasing the cost of the system.

The software monitoring arrangement 220 therefore includes, in some embodiments, a performance calculator 225 configured to determine a prediction performance 225', that is a performance of the state predictor 221. The software monitoring arrangement 220 also includes, in some embodiments, a compensator calculator 226 configured to determine a compensator 226' based on the prediction performance 225'. This allows for any prediction errors in predicted state 221' or bad performance of the state predictor 221 to be compensated for based on the compensator 226' when determining the standby capacity. The software monitoring arrangement 220 is configured, in some embodiments, to determine the standby capacity based on the compensator 226', as well as on the predicted state 221'.

In some embodiments the software monitoring arrangement 220 is further configured to store a predicted state 221' of the software system 200 for later determining if the predicted state 221' was accurate or not. In this regard, the software monitoring arrangement 220 includes an accuracy calculator 224 configured to determine a prediction accuracy 224' of the state predictor. In some embodiments the accuracy calculator 224 determines the prediction accuracy 24' based on a stored predicted state for a specific time period and the received performance metrics for the specific time period (same, adjacent or overlapping).

In some such embodiments the accuracy calculator 224 determines the prediction accuracy 24' based on the number of times the predicted state has been stored, where a high number gives a higher accuracy.

The software monitoring arrangement 220 in such embodiments determines the prediction performance 226' based on the prediction accuracy 224'. In cases where a low prediction accuracy is determined, a low prediction performance will also be determined. In some embodiments the prediction performance 226' is or corresponds directly to the prediction accuracy 224'. In some such embodiments the prediction performance 226' is determined as the prediction accuracy 224' over time (such as an average over a past time period). In some such embodiments, the accuracy calculator 224 is comprised in the performance calculator 226.

In order to provide adaptability of the standby pool, for example for satisfying higher requirements on time constraints, and/or higher requirements on cost efficiency, the software monitoring arrangement 220 is further configured to determine the compensator 226' based on a safety factor (k). The safety factor k is, in some embodiments set by the software system 2000. In some embodiments the safety factor k is set by a user of a service 215. In some embodiments the safety factor k is set by a system designer of the software system 200 or of a service 215.

In some embodiments the safety factor is set dynamically. In some such embodiments the safety factor is set as a function of the prediction performance, where a high (in some aspect) prediction performance results in a lower (in some aspect) safety factor. In some such embodiments the safety factor is set as a function of training the prediction performance. In some such embodiments a safety actor k is set according to how well a model is trained. The models used for the state predictors have been touched upon briefly in the above with reference to figure 2A and will be discussed in more detail in the below.

In some embodiments the safety factor k is arranged to provide a greater margin of error for the standby pool (i.e. a larger size and/or more powerful resources) in order to ensure or at least increase the likelihood that resources are available by reserving possibly unnecessary resources.

In some embodiments the safety factor k is arranged to provide a lower cost for the standby pool (i.e. a smaller size and/or cheaper resources) in order to ensure or at least decrease the cost of resources by reserving only (absolutely) necessary resources.

In order to provide additional security as regards uninterrupted execution and to ensure that sufficient resources are always available, the software monitoring arrangement 220 further includes, in some embodiments, a minimum standby pool calculator 223 configured to determine a minimum standby pool size 223' when executed. The minimum standby pool size 223' is determined based on the predicted state 221'. In some embodiments the minimum standby pool size 223' is determined to ensure that some constraints are indeed satisfied.

The software monitoring arrangement 220 is further configured to execute the standby capacity calculator 222 to determine the standby capacity 222' based also on the minimum standby pool size 223' ensuring that the minimum size 223' is available.

It could be noted that the time-horizon for scaling the amount of standby resources is larger than the time-horizon for what resources are needed for the live capacity control. The standby capacity calculator or controller 222 must therefore rely on the predicted performance 225' of the state predictor 221. The state predictor 221' generates the predicted state which results in an (minimum) amount of standby resources in the standby pool 206. In other words this is based on the minimum amount of resource that the system will need in order to meet the predicted performance levels. The actual size of the standby pool 206 used enables for a more adaptable allocation of resources from the standby pool, as more resources than the bare minimum are made available. In some embodiments the minimum standby pool size is the standby pool size and the minimum standby pool size calculator 223 is comprised in the standby pool calculator 222.

It should be noted that even though terminology such as "size" is used, the size is not to be taken as a simple reference to a total number of resources. The size of the standby pool is to be regarded as a matrix of computational resources of varying kind, performance and availability.

As discussed in the above with regards to figure 2A, the state predictor is in some embodiments based on a model. The software monitoring arrangement 220 of figure 2B is therefore shown as comprising a system model 228' and wherein the predicted state 221' is determined based on the system model 228' The system model 228' is a model of the software system 200 and it may be represented in many different manners as would be understood by a skilled person.

In some embodiments the system model 228' is based on machine learning such as neural networks, and the system model 28' is in some such embodiments represented by a neural network. In some such embodiments the software monitoring arrangement 220 is configured (when executed by the controller 101) to determine the predicted state 221' through the state predictor 221 utilizing such a neural network. In some embodiments, the neural network is based on deep learning. In some embodiments, the neural network is based on convolutional neural networks (CNN).

This allows for adapting to a vast number of different possibilities which may only differ in small increments but hade hugely different effects that would be very complicated indeed to provide a mechanistic performance model for.

In order to enable the software monitoring arrangement 220 of the teachings herein to autonomously adapt to changes in the software system 200 or to changes or errors in the system model 228' or the prediction(s) 221' made based on the model 228', the software monitoring arrangement 220 is configured to (re)train the system model 228'. The software monitoring arrangement 220 therefore stores some (for example every other, every tenth, or any such interval) or all state predictions 221' made, at least over a time period of for example 10 ms, 100 ms, 1 s, 10 s, 100 s, 10 minutes, 1 hour, 24 hours. The corresponding performance metrics for the predicted states are also stored, possibly along with the predicted states 221'. This allows for a model trainer 228 that is comprised in the software monitoring arrangement 220 to train the system model 228' based on the stored (or at least a subset of the stored) predicted states and the corresponding performance metrics.

In order to increase the accuracy of the training as well as reducing the needed storage capacity of the system model trainer 228, the software monitoring arrangement 220 is, in some embodiments, configured to only store predicted states that show a prediction accuracy exceeding a quality level, for example 70 %, 75%, 80%, 85%, 90%, 95% or 99%.

In some embodiments the software monitoring arrangement 220 is configured to perform such (re)training when the performance 225' of the state predictor 221 falls below a performance threshold. The threshold is dependent on the representation of the accuracy, but may generally be referred to in percentages, and the performance level may thus be any of or in the range of any of for example 70 %, 75%, 80%, 85%, 90%, 95% or 99%.

The threshold is in some embodiments set by a system designer. The threshold is in some embodiments set dynamically by the software monitoring arrangement 220.

In some embodiments the threshold is set as a level of accuracy thereby being able to adapt to a low accuracy. In some embodiments the threshold is set as a number of miss predictions or predictions of low level of accuracy thereby being able to adapt to a repeatedly low accuracy. In some embodiments the threshold is set as a rate of change in level of accuracy thereby being able to adapt to a change in accuracy.

As mentioned in the above, the performance metrics reflect or represent a measured state of a service 215, some services 215 or all services 215.

In some embodiments the performance metrics are representations of performances such as processing times, response times, response accuracy, memory read successes, queue sizes, worker threads, compute units, fan speeds, radio connections, execution frequency, cache allocations and so on to mention a few examples. In some such embodiments the live-capacity controller 210 receives the performance metrics (or rather the first (subset of) performance metrics in a format that the live-capacity controller 210 is arranged to understand and to determine what computational resources to assign based on the received performance metrics. For example if the response times increase, the live-controller may respond by assigning more CPU time.

In further some such embodiments the software monitoring arrangement 220 receives the performance metrics (or rather the second (subset of) performance metrics in a format that the software monitoring arrangement 220 is arranged to understand and to predict a future state based on the received performance metrics.

However, such embodiments, especially as relates to the state predictor 221, are complicated to set up as there are so many different services, all likely to provide the performance metrics in different formats, which then all need to be handled and understood in order for an accurate prediction.

The inventors have, however, realized after insightful and inventive reasoning, that this longstanding problem can be overcome by transforming all incoming performance metrics into a format where the meaning of the performance metrics is unknown to the state predictor. In one such embodiment, the performance metrics are all (possibly individually) normalized, for example to a value between 0 and 1. The transformation may be performed by the providing service 215, the live-controller 210, the state predictor 221 or any component or entity in between. It is not of importance exactly where the performance metrics are formatted or how, and variations are possible.

Alternatively, no transformation is performed, but the software monitoring arrangement 220 and especially the state predictor does not put any particular emphasis on the exact meaning of a performance metric.

One or more of the services 215 are thus opaque services 215 in some embodiments and provide performance metrics comprising at least one opaque data entity. As would be understood an opaque data entity is a data entity whose representation may be known to the service providing the data entity, but is unknown to the software monitoring arrangement 220.

It is thereafter possible to recognize and associate patterns of performance metrics, irrespective of the actual meaning of such patterns, with states of the service(s) 215 of the software system 200.

The system model 228' is thus, in some embodiments, trained to associate such patterns of performance metrics with states, wherein the states represent or corresponds to computational requirements, which may then be fulfilled by the computational resources 205. Based on the predicted state, the software monitoring arrangement 220 is thus configured to determine whether a change (such as an increase, a decrease or other change) is to be expected and in response thereto reserve computational resources 205 to the standby pool accordingly. It should be noted that in this context the terminology of "reserve" or "making reservations" includes cancelling any already existing reserved computational resources, a cancellation thus being treated as a negative reservation. Similarly a cancellation of a computational resource, may be seen as a negative assignment of a resource. And, a negatively assigned resource i.e. a cancelled resource) may thus be seen as being freed up from the used computational resources and no longer part of the standby pool, or returned to the standby pool depending on the implementation and the case at hand.

It should be mentioned that the terminology of opaque data or opaque services are well-known and would be understood by a skilled person in the field of software services.

As mentioned in the above, the inventors have realized that by providing the performance metrics as images to the state predictor 221 has a great advantage in that already existing power tools may be utilized, namely neural networks arranged for image recognition, object classification or object detection to mention a few examples. In particular there are many very powerful Convolutional Neural Networks available that may be trained to associate the patterns of the performance metrics with objects being expressed as states of the service(s) 215 of the software system 200.

As expressed above, the performance metrics may be received as opaque data entities, and in one such embodiment, the data entity may be one or more images. In some such embodiments, an image may be generated so that a (group of) pixel(s) is associated with a performance aspect and is assigned a value regarding how well that aspect performs. This may provide an image with different color or grey scales depending on the performance of the service(s) 215. In such an image an actual pattern may be recognized and associated with a state. It should be noted that the images discussed herein need not be visible or comprehensible to a human as they are only processed by computer processors.

It should be noted that the image(s) may be generated based on opaque data entities in some embodiments. And that the image(s) may be generated based on non-opaque data entities in some embodiments.

In some embodiments the second (subset of) performance metrics thus comprises one or more images representing one or more current states of the one or more services of the software system. And in such embodiments, the software monitoring arrangement 220 is configured to determine the predicted state 221' of the software system 200 based on image analysis of the one or more images. In some such embodiments, the software monitoring arrangement 220 is further configured to provide said image analysis to recognize a pattern in the one or more images, which pattern is associated with a known state, wherein the predicted state is determined to be the known state, the known state being a previously experienced state that was experienced when the same performance metrics were received.

In some embodiments, the performance metrics present a moment in time. In such embodiments, the state predictor is trained to associate a moment in time with a predicted state. For embodiments based on image analysis, the state predictor 221 is configured to determine the predicted state based on one image for one or more services 215.

In some embodiments, the performance metrics present a series of moments (i.e. a time period) in time. In such embodiments, the state predictor is trained to associate a time period with a predicted state. The pattern may in such embodiments also be a pattern over time. For embodiments based on image analysis, the state predictor 221 is configured to determine the predicted state based on a series (or stream) of images for one or more services 215.

It should be noted that since the software monitoring arrangement 220 is executed by the controller 101 of the software monitoring arrangement 100 and as there is made no difference between the two, there is also not made any difference between the software monitoring arrangement 220 comprising some functionality or the controller 101 of the software monitoring arrangement 100 being configured to execute such functionality.

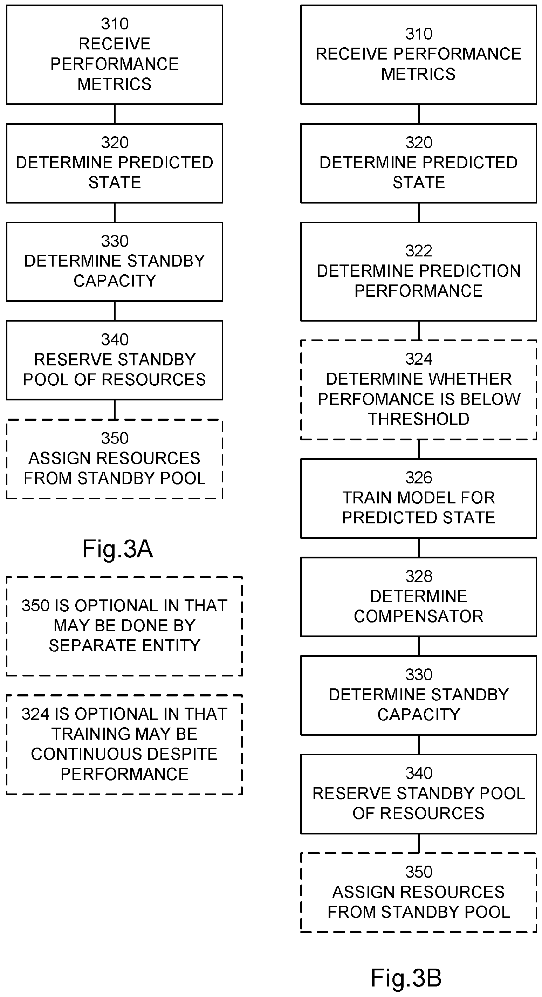

Figure 3A shows a flowchart of a general method according to an embodiment of the teachings herein. The method utilizes a monitoring arrangement 100 as taught herein and as disclosed with particular reference to figure 2A. The monitoring arrangement 100 receives 310 performance metrics for one or more services 215 of a software system 200 as in figure 2A (or figure 2B). The software monitoring arrangement 220 then determines 320 a predicted state based on the received performance metrics. The software monitoring arrangement 220 also determines 330 a standby capacity of computational resources based on the determined predicted state and reserves 340 computational resources to a standby pool of computational resources 206 accordingly. This allows a live-controller 210 to assign any changes in resources from the standby pool.

It should be noted that the method may comprise further functionalities as discussed in relation to figure 2A.

Figure 3B shows a flowchart of a general method according to an embodiment of the teachings herein. The method utilizes a monitoring arrangement 100 as taught herein and as disclosed with particular reference to figure 2B. The flow chart of figure 3B comprise all processes, steps, actions and functionalities of the method of figure 3A. However, in some embodiments the monitoring arrangement 100 also determines 322 a performance of the prediction of the predicted state 221'. In some embodiments the model 228' of the software system 200 is also trained 326 based on the predicted state. Optionally the training is performed if the performance of the prediction falls below 324 a threshold value. In some embodiments a compensator is also determined 328 for adapting the standby capacity based on the performance prediction. Alternatives for these embodiments and more are discussed in the above with reference to figures 2A and 2B.

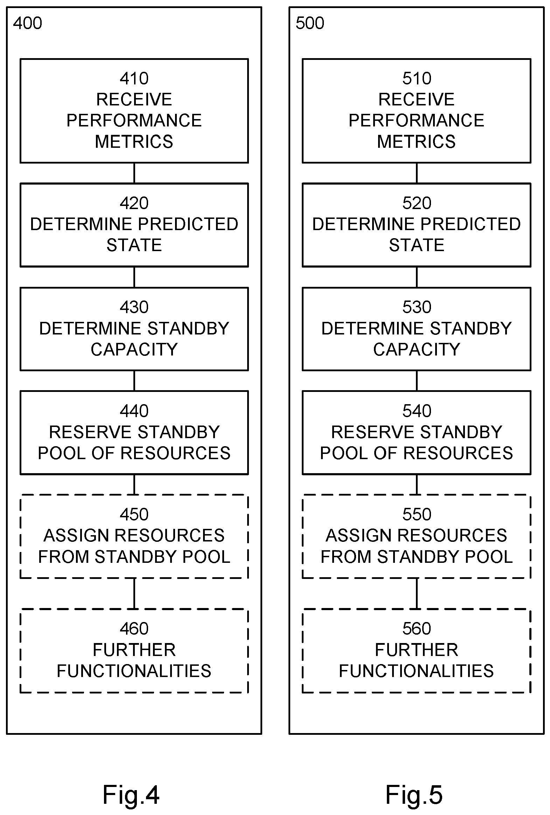

Figure 4 shows a component view for a software component (or module) arrangement 400 according to an embodiment of the teachings herein. The software component arrangement 400 is adapted to be used in a monitoring arrangement 100 as taught herein for automated software monitoring of (real-time) services as taught herein for automated software monitoring of a software system comprising one or more of computational resources configured to execute one or more services and a live capacity controller configured to receive performance metrics from the one or more services and to assign a portion of the computational resources to the one or more services based on the performance metrics, wherein the software component arrangement 400 comprises: a software component 410 for receiving the performance metrics; a software component 420 for determining a predicted state of the software system; a software component 430 for determining a standby capacity based on the predicted state; and a software component 440 for reserving computational resources according to the standby capacity to a standby pool of computational resources enabling the live capacity controller execute a software component 450 for assigning an increase in the portion of the computational resources to the one or more services from the standby pool.

As is indicated in figure 4, the arrangement 400 comprises, in some embodiments, additional software components 460 for performing any of the methods or functions disclosed herein.

It should be noted that a software component may be replaced or supplemented by a software module.

Figure 5 shows a component view for an arrangement 500 comprising circuitry for monitoring of (real-time) services according to an embodiment of the teachings herein. The arrangement 500 comprising circuitry for monitoring of services is adapted to be used in a monitoring arrangement 100 as taught herein of a software system comprising one or more of computational resources configured to execute one or more services and a live capacity controller configured to receive performance metrics from the one or more services and to assign a portion of the computational resources to the one or more services based on the performance metrics, wherein the arrangement 500 of figure 5 comprises circuitry 510 arranged to receive the performance metrics; circuitry 520 arranged to determine a predicted state of the software system; circuitry 530 arranged to determine a standby capacity based on the predicted state; and circuitry 540 arranged to reserve computational resources according to the standby capacity to a standby pool of computational resources enabling the live capacity controller to execute circuitry 550 arranged to assign an increase in the portion of the computational resources to the one or more services from the standby pool.

As is indicated in figure 5, the arrangement 500 comprises in some embodiments additional circuitry 560 for performing any of the methods or functions disclosed herein.

As has been discussed in the above, the live capacity controller may be regarded as a real-time controller, especially when controlling real-time services 215.

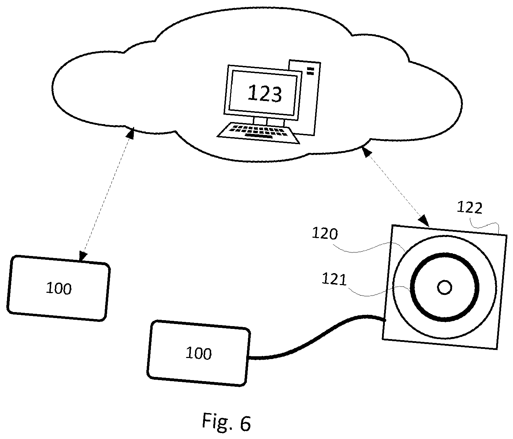

Figure 6 shows a schematic view of a computer-readable medium 120 carrying computer instructions 121 that when loaded into and executed by a controller of a software monitoring of (real-time) services arrangement 100 enables the software monitoring of (real-time) services arrangement 100 to implement the present invention.

The computer-readable medium 120 may be tangible such as a hard drive or a flash memory, for example a USB memory stick or a cloud server. Alternatively, the computer-readable medium 120 may be intangible such as a signal carrying the computer instructions enabling the computer instructions to be downloaded through a network connection, such as an internet connection.

In the example of figure 6, a computer-readable medium 120 is shown as being a computer disc 120 carrying computer-readable computer instructions 121, being inserted in a computer disc reader 122. The computer disc reader 122 may be part of a cloud server 123 - or other server - or the computer disc reader may be connected to a cloud server 123 - or other server. The cloud server 123 may be part of the internet or at least connected to the internet. The cloud server 123 may alternatively be connected through a proprietary or dedicated connection. In one example embodiment, the computer instructions are stored at a remote server 123 and be downloaded to the memory 102 of the software monitoring of real-time services arrangement 100 for being executed by the controller 101.

The computer disc reader 122 may also or alternatively be connected to (or possibly inserted into) a software monitoring of real-time services arrangement 100 for transferring the computer-readable computer instructions 121 to a controller of the software monitoring of real-time services arrangement (presumably via a memory of the software monitoring of real-time services arrangement 100).

Figure 6 shows both the situation when a software monitoring of (real-time) services arrangement 100 receives the computer-readable computer instructions 121 via a wireless server connection (non-tangible) and the situation when another software monitoring of (real-time)services arrangement 100 receives the computer-readable computer instructions 121 through a wired interface (tangible). This enables for computer-readable computer instructions 121 being downloaded into a software monitoring of (real-time) services arrangement 100 thereby enabling the software monitoring of (real-time) services arrangement 100 to operate according to and implement the invention as disclosed herein.

## Claims

1. A software monitoring arrangement (100, 220) arranged to monitor a software system comprising one or more of computational resources (205), wherein the software system is configured to execute one or more services (215) each utilizing a portion of the one or more of computational resources (205) and the software system further comprises a live capacity controller (210) configured to receive one or more first performance metrics (PM) from the one or more services (215) and to assign the portion of the computational resources (205) to the one or more services (215) based on the first performance metrics (PM), **characterised in that** the software monitoring arrangement (100, 220) comprises a controller (101) configured to:
receive second performance metrics (PM);
execute a state predictor (221) to determine a predicted state (221') of the software system (200) based on the second performance metrics (PM);
execute a standby capacity calculator (222) to determine a standby capacity (222') based on the predicted state (221'), wherein to determine a standby capacity involves monitoring the performance of the software system (200) and predicting a future state of the software system (200) representing the requirements of at least some of the services (215) of the software system (200); and
reserve computational resources according to the standby capacity to a standby pool (206) of computational resources enabling the live capacity controller (210) to assign a change in the portion of the computational resources (205) to the one or more services (215) from the standby pool, wherein the standby pool (206) is used to reserve the needed capacity ahead of time, wherein the live capacity controller (210) is a real time capacity controller (210) that monitors real-time services, and wherein enabling the live capacity controller (210) involves assigning any change in the assigned portion of computational resources (205) for any service(s) (215) quickly and effectively from the standby pool (206) of computational resources.

2. The software monitoring arrangement (100) according to claim 1, wherein the controller (101) is further configured to:
execute a performance calculator (225) to determine a prediction performance (225'), wherein the prediction performance (225') is a performance of the state predictor (221);
execute a compensator calculator (226) to determine a compensator (226') based on the prediction performance which allows for any prediction errors in predicted state (221') or bad performance of the state predictor (221) to be compensated for based on the compensator (226') when determining the standby capacity; and
determine the standby capacity based on the compensator (226') as well as on the predicted state (221').

3. The software monitoring arrangement (100) according to claim 2, wherein the controller (101) is further configured to
execute an accuracy calculator (224) to determine a prediction accuracy (224') by comparing the second performance metrics (PM) for a specific time period to the previously stored predicted state (221') of the software system (200) for the specific time period, and to
determine the prediction performance (226') based on the prediction accuracy (224').

4. The software monitoring arrangement (100) according to claim 2 or 3, wherein the controller (101) is further configured to determine the compensator (226') based on a safety factor, k, wherein the safety factor, k, provides adaptability of the standby pool (206).

5. The software monitoring arrangement (100) according to any preceding claim, wherein the controller (101) is further configured to
execute a minimum standby pool calculator (223) to determine a minimum standby pool size (223') based on the predicted state (221') and in response thereto
execute the standby capacity calculator (222) to determine the standby capacity (222') based also on the minimum standby pool size (221').

6. The software monitoring arrangement (100) according to any preceding claim, wherein the controller (101) is further configured to determine the predicted state (221') based on a system model (228').

7. The software monitoring arrangement (100) according to claim 6, wherein the controller (101) is further configured to determine the predicted state (221') based on the system model (228') utilizing a neural network.

8. The software monitoring arrangement (100) according to claim 6 or 7, wherein the controller (101) is further configured to
store the predicted state (221');
store the received performance metrics (PM); and
execute a model trainer (228) to train the system model based on the stored predicted states and the stored received performance metrics.

9. The software monitoring arrangement (100) according to any of claims 6 to 8 when dependent on claim 2, wherein the controller (101) is further configured to
determine that the prediction performance falls below a threshold and in response thereto train the system model (228').

10. The software monitoring arrangement (100) according to any preceding claim, wherein the second performance metrics comprises at least one performance metric from a first service of the one or more services (205), wherein the performance metric from the first service comprises an opaque data entity.

11. The software monitoring arrangement (100) according to any preceding claim, wherein the first performance metrics is at least a subset of the second performance metrics.

12. The software monitoring arrangement (100) according to any preceding claim, wherein the controller (101) is further configured to
reserve computational resources according to the standby capacity to the standby pool (206) of computational resources enabling the live capacity controller (210) to assign an increase in the portion of the computational resources (205) to the one or more services (215)

13. A method for automated software monitoring of a software system comprising
a one or more of computational resources configured to execute one or more services each utilizing a portion of the one or more of computational resources, a live capacity controller configured to receive one or more first performance metrics from the one or more services and to assign a portion of the computational resources to the one or more services based on the first performance metrics, and a controller, **characterised in that** the method comprises:
receiving (310) by the controller second the performance metrics (PM);
determining (320) by the controller a predicted state (221') of the software system (200) based on the second performance metrics (PM);
determining (330) by the controller a standby capacity (222') based on the predicted state (221'), wherein determining a standby capacity involves monitoring the performance of the software system (200) and predicting a future state of the software system (200) representing the requirements of at least some of the services (215) of the software system (200); and
reserving (340) by the controller computational resources according to the standby capacity to a standby pool (206) of computational resources enabling the live capacity controller (210) to assign a change in the portion of the computational resources (205) to the one or more services (215) from the standby pool (206), wherein the standby pool (206) is used to reserve the needed capacity ahead of time, wherein the live capacity controller (210) is a real time capacity controller (210) that monitors real-time services, and wherein enabling the live capacity controller (210) involves assigning any change in the assigned portion of computational resources (205) for any service(s) (215) quickly and effectively from the standby pool (206) of computational resources.

14. A computer-readable medium (120) comprising computer instructions (121) which when executed by a controller (101) of a software monitoring arrangement (100) according to claim 1, cause the software monitoring arrangement (100) to carry out method of claim 13.

## Patentansprüche

1. Software-Überwachungsanordnung (100, 220), die dazu angeordnet ist, ein Softwaresystem zu überwachen, das eine oder mehrere Rechenressourcen (205) umfasst, wobei das Softwaresystem dazu konfiguriert ist, einen oder mehrere Dienste (215) auszuführen, von denen jeder einen Teil der einen oder der mehreren Rechenressourcen (205) nutzt, und das Softwaresystem ferner eine Live-Kapazitätssteuerung (210) umfasst, die dazu konfiguriert ist, eine oder mehrere erste Leistungsmetriken (PM) von dem einen oder den mehreren Diensten (215) zu empfangen und den Teil der Rechenressourcen (205) dem einen oder den mehreren Diensten (215) basierend auf den ersten Leistungsmetriken (PM) zuzuweisen, **dadurch gekennzeichnet, dass** die Software-Überwachungsanordnung (100, 220)
eine Steuerung (101) umfasst, die zu Folgendem konfiguriert ist:
Empfangen zweiter Leistungsmetriken (PM);
Ausführen eines Zustandsvorhersagers (221) dazu, einen vorhergesagten Zustand (221') des Softwaresystems (200) basierend auf den zweiten Leistungsmetriken (PM) zu bestimmen;
Ausführen eines Standby-Kapazitätsrechners (222) dazu, eine Standby-Kapazität (222') basierend auf dem vorhergesagten Zustand (221') zu bestimmen, wobei das Bestimmen einer Standby-Kapazität Überwachen der Leistung des Softwaresystems (200) und Vorhersagen eines zukünftigen Zustands des Softwaresystems (200) umfasst, was die Anforderungen mindestens einiger der Dienste (215) des Softwaresystems (200) repräsentiert; und
Reservieren von Rechenressourcen gemäß der Standby-Kapazität für einen Standby-Pool (206) mit Rechenressourcen, was die Live-Kapazitätssteuerung (210) dazu befähigt, dem einen oder den mehreren Diensten (215) eine Änderung bei dem Teil der Rechenressourcen (205) aus dem Standby-Pool zuzuweisen, wobei der Standby-Pool (206) dazu verwendet wird, die benötigte Kapazität im Voraus zu reservieren, wobei die Live-Kapazitätssteuerung (210) eine Echtzeit-Kapazitätssteuerung (210) ist, die Echtzeitdienste überwacht, und wobei das Befähigen der Live-Kapazitätssteuerung (210) Zuweisen einer beliebigen Änderung des zugewiesenen Teils der Rechenressourcen (205) für (einen) beliebige(n) Dienst(e) (215) schnell und effektiv aus dem Standby-Pool (206) mit Rechenressourcen beinhaltet.

2. Software-Überwachungsanordnung (100) nach Anspruch 1, wobei die Steuerung (101) ferner zu Folgendem konfiguriert ist:
Ausführen eines Leistungsrechners (225) dazu, eine Vorhersageleistung (225') zu bestimmen, wobei die Vorhersageleistung (225') eine Leistung des Zustandsvorhersagers (221) ist;
Ausführen eines Kompensator-Rechners (226) dazu, einen Kompensator (226') basierend auf der Vorhersageleistung zu bestimmen, der es ermöglicht, beliebige Vorhersagefehler bei dem vorhergesagten Zustand (221') oder schlechte Leistung des Zustandsvorhersagers (221) zu kompensieren, basierend auf dem Kompensator (226') beim Bestimmen der Standby-Kapazität; und
Bestimmen der Standby-Kapazität basierend auf dem Kompensator (226') sowie auf dem vorhergesagten Zustand (221').

3. Software-Überwachungsanordnung (100) nach Anspruch 2, wobei die Steuerung (101) ferner zu Folgendem konfiguriert ist:
Ausführen eines Genauigkeitsrechners (224) dazu, eine Vorhersagegenauigkeit (224') durch Vergleichen der zweiten Leistungsmetriken (PM) für einen spezifischen Zeitraum mit dem zuvor gespeicherten vorhergesagten Zustand (221') des Softwaresystems (200) für den spezifischen Zeitraum zu bestimmen, und
Bestimmen der Vorhersageleistung (226') basierend auf der Vorhersagegenauigkeit (224').

4. Software-Überwachungsanordnung (100) nach Anspruch 2 oder 3, wobei die Steuerung (101) ferner dazu konfiguriert ist, den Kompensator (226') basierend auf einem Sicherheitsfaktor, k, zu bestimmen, wobei der Sicherheitsfaktor, k, Anpassbarkeit des Standby-Pools (206) bereitstellt.

5. Software-Überwachungsanordnung (100) nach einem der vorhergehenden Ansprüche, wobei die Steuerung (101) ferner zu Folgendem konfiguriert ist:
Ausführen eines Rechners (223) für einen Mindest-Standby-Pool dazu, eine Mindest-Standby-Pool-Größe (223') basierend auf dem vorhergesagten Zustand (221') zu bestimmen, und als Reaktion darauf
Ausführen des Rechners (222) für die Standby-Kapazität dazu, die Standby-Leistung (222') ebenfalls basierend auf der Mindest-Standby-Pool-Größe (221') zu bestimmen.

6. Software-Überwachungsanordnung (100) nach einem der vorhergehenden Ansprüche, wobei die Steuerung (101) ferner dazu konfiguriert ist, den vorhergesagten Zustand (221') basierend auf einem Systemmodell (228') zu bestimmen.

7. Software-Überwachungsanordnung (100) nach Anspruch 6, wobei die Steuerung (101) ferner dazu konfiguriert ist, den vorhergesagten Zustand (221') basierend auf dem Systemmodell (228') unter Verwendung eines neuronalen Netzes zu bestimmen.

8. Software-Überwachungsanordnung (100) nach Anspruch 6 oder 7, wobei die Steuerung (101) ferner zu Folgendem konfiguriert ist:
Speichern des vorhergesagten Zustands (221');
Speichern der empfangen Leistungsmetriken (PM); und
Ausführen eines Modelltrainers (228) dazu, das Systemmodell basierend auf den gespeicherten vorhergesagten Zuständen und den gespeicherten empfangenen Leistungsmetriken zu trainieren.

9. Software-Überwachungsanordnung (100) nach einem der Ansprüche 6 bis 8, wenn abhängig von Anspruch 2, wobei die Steuerung (101) ferner zu Folgendem konfiguriert ist:
Bestimmen, dass die Vorhersageleistung unter einen Schwellenwert fällt, und als Reaktion darauf Trainieren des Systemmodells (228').

10. Software-Überwachungsanordnung (100) nach einem der vorhergehenden Ansprüche, wobei die zweiten Leistungsmetriken mindestens eine Leistungsmetrik von einem ersten Dienst des einen oder der mehreren Dienste (205) umfassen, wobei die Leistungsmetrik von dem ersten Dienst eine undurchsichtige Datenentität umfasst.

11. Software-Überwachungsanordnung (100) nach einem der vorhergehenden Ansprüche, wobei die ersten Leistungsmetriken mindestens ein Untersatz der zweiten Leistungsmetriken sind.

12. Software-Überwachungsanordnung (100) nach einem der vorhergehenden Ansprüche, wobei die Steuerung (101) ferner zu Folgendem konfiguriert ist:
Reservieren von Rechenressourcen gemäß der Standby-Kapazität für den Standby-Pool (206) mit Rechenressourcen, was die Live-Kapazitätssteuerung (210) dazu befähigt, dem einen oder den mehreren Diensten (215) eine Steigerung des Teils der Rechenressourcen (205) zuzuweisen

13. Verfahren zur automatisierten Softwareüberwachung eines Softwaresystems, umfassend:
eine oder mehrere Rechenressourcen, die dazu konfiguriert sind, einen oder mehrere Dienste auszuführen, von denen jeder einen Teil der einen oder der mehreren Rechenressourcen nutzt, eine Live-Kapazitätssteuerung, die dazu konfiguriert ist, eine oder mehrere erste Leistungsmetriken von dem einen oder den mehreren Diensten zu empfangen und einen Teil der Rechenressourcen dem einen oder den mehreren Diensten basierend auf den ersten Leistungsmetriken zuzuweisen, und eine Steuerung, **dadurch gekennzeichnet, dass** das Verfahren Folgendes umfasst:
Empfangen (310) durch die Steuerung zweiter der Leistungsmetriken (PM);
Bestimmen (320) durch die Steuerung eines vorhergesagten Zustands (221') des Softwaresystems (200) basierend auf den zweiten Leistungsmetriken (PM);
Bestimmen (330) durch die Steuerung einer Standby-Kapazität (222') basierend auf dem vorhergesagten Zustand (221'), wobei das Bestimmen einer Standby-Kapazität Überwachen der Leistung des Softwaresystems (200) und Vorhersagen eines zukünftigen Zustands des Softwaresystems (200) umfasst, was die Anforderungen mindestens einiger der Dienste (215) des Softwaresystems (200) repräsentiert; und
Reservieren (340) durch die Steuerung von Rechenressourcen gemäß der Standby-Kapazität für einen Standby-Pool (206) mit Rechenressourcen, was die Live-Kapazitätssteuerung (210) dazu befähigt, dem einen oder den mehreren Diensten (215) eine Änderung bei dem Teil der Rechenressourcen (205) aus dem Standby-Pool (206) zuzuweisen, wobei der Standby-Pool (206) dazu verwendet wird, die benötigte Kapazität im Voraus zu reservieren, wobei die Live-Kapazitätssteuerung (210) eine Echtzeit-Kapazitätssteuerung (210) ist, die Echtzeitdienste überwacht, und wobei das Befähigen der Live-Kapazitätssteuerung (210) Zuweisen einer beliebigen Änderung des zugewiesenen Teils der Rechenressourcen (205) für (einen) beliebige(n) Dienst(e) (215) schnell und effektiv aus dem Standby-Pool (206) mit Rechenressourcen beinhaltet.

14. Computerlesbares Medium (120), das Computeranweisungen (121) umfasst, die, wenn sie von einer Steuerung (101) einer Software-Überwachungsanordnung (100) nach Anspruch 1 ausgeführt werden, die Software-Überwachungsanordnung (100) dazu veranlassen, das Verfahren nach Anspruch 13 durchzuführen.

## Revendications

1. Agencement de surveillance logicielle (100, 220) agencé pour surveiller un système logiciel comprenant une ou plusieurs ressources informatiques (205), dans lequel le système logiciel est configuré pour exécuter un ou plusieurs services (215) utilisant chacun une partie des une ou plusieurs ressources informatiques (205), et le système logiciel comprend en outre un contrôleur de capacité en direct (210) configuré pour recevoir une ou plusieurs premières métriques de performance (PM) à partir des un ou plusieurs services (215) et pour attribuer la partie des ressources informatiques (205) aux un ou plusieurs services (215) sur la base des premières mesures de performance (PM), **caractérisé en ce que** l'agencement de surveillance logicielle (100, 220) comprend un contrôleur (101) configuré pour :
recevoir des deuxièmes métriques de performance (PM) ;
exécuter un prédicteur d'état (221) pour déterminer un état prédit (221') du système logiciel (200) sur la base des deuxièmes métriques de performance (PM) ;
exécuter un calculateur de capacité de secours (222) pour déterminer une capacité de secours (222') basée sur l'état prédit (221'), la détermination d'une capacité de secours impliquant la surveillance des performances du système logiciel (200) et la prédiction d'un état futur du système logiciel (200) représentant les exigences d'au moins certains des services (215) du système logiciel (200) ; et
réserver des ressources de calcul en fonction de la capacité de secours à un pool de secours (206) de ressources de calcul permettant au contrôleur de capacité en direct (210) d'attribuer une modification de la partie de ressources de calcul (205) aux un ou plusieurs services (215) à partir du pool de secours, dans lequel le pool de secours (206) est utilisé pour réserver la capacité nécessaire à l'avance, dans lequel le contrôleur de capacité en direct (210) est un contrôleur de capacité en temps réel (210) qui surveille les services en temps réel, et dans lequel l'activation du contrôleur de capacité en direct (210) implique l'attribution rapide et efficace de toute modification de la partie attribuée de ressources de calcul (205) à tout service (215) à partir du pool de secours (206) de ressources de calcul.

2. Agencement de surveillance logicielle (100) selon la revendication 1, dans lequel le contrôleur (101) est en outre configuré pour :
exécuter un calculateur de performance (225) pour déterminer une performance de prédiction (225'), dans lequel la performance de prédiction (225') est une performance du prédicteur d'état (221) ;
exécuter un calculateur de compensation (226) pour déterminer un compensateur (226') basé sur la performance de prédiction, permettant de compenser toute erreur de prédiction dans l'état prédit (221') ou toute mauvaise performance du prédicteur d'état (221) sur la base du compensateur (226') lors de la détermination de la capacité de secours ; et
déterminer la capacité de secours en fonction du compensateur (226') ainsi que de l'état prédit (221').

3. Agencement de surveillance logicielle (100) selon la revendication 2, dans lequel le contrôleur (101) est en outre configuré pour
exécuter un calculateur de précision (224) pour déterminer un précision de prédiction (224') en comparant les deuxièmes métriques de performance (PM) pour une période donnée à l'état prédit précédemment enregistré (221') du système logiciel (200) pour la période donnée, et pour
déterminer la performance de prédiction (226') en fonction de la précision de prédiction (224').

4. Agencement de surveillance logicielle (100) selon la revendication 2 ou 3, dans lequel le contrôleur (101) est en outre configuré pour déterminer le compensateur (226') sur la base d'un facteur de sécurité, k, dans lequel le facteur de sécurité, k, fournit l'adaptabilité du pool de secours (206).

5. Agencement de surveillance logicielle (100) selon l'une quelconque des revendications précédentes, dans lequel le contrôleur (101) est en outre configuré pour
exécuter un calculateur de pool de secours minimal (223) pour déterminer une taille minimale de pool de secours (223') en fonction de l'état prédit (221') et en réponse à celui-ci
exécuter le calculateur de capacité de secours (222) pour déterminer la capacité de secours (222') en fonction également de la taille minimale du pool de secours (221').

6. Agencement de surveillance logicielle (100) selon l'une quelconque des revendications précédentes, dans lequel le contrôleur (101) est en outre configuré pour déterminer l'état prédit (221') sur la base d'un modèle de système (228').

7. Agencement de surveillance logicielle (100) selon la revendication 6, dans lequel le contrôleur (101) est en outre configuré pour déterminer l'état prédit (221') sur la base du modèle de système (228') en utilisant un réseau neuronal.

8. Agencement de surveillance logicielle (100) selon la revendication 6 ou 7, dans lequel le contrôleur (101) est en outre configuré pour
stocker l'état prédit (221');
stocker les métriques de performance reçues (PM) ; et
exécuter un entraîneur de modèle (228) pour entraîner le modèle du système sur la base des états prédits stockés et des métriques de performance reçues stockées.

9. Agencement de surveillance logicielle (100) selon l'une quelconque des revendications 6 à 8 lorsqu'elles dépendent de la revendication 2, dans lequel le contrôleur (101) est en outre configuré pour
déterminer que les performances de prédiction tombent en dessous d'un seuil et, en réponse à cela, entraîner le modèle de système (228').

10. Agencement de surveillance logicielle (100) selon l'une quelconque des revendications précédentes, dans lequel les deuxièmes mesures de performance comprennent au moins une mesure de performance provenant d'un premier service parmi les un ou plusieurs services (205), dans lequel la mesure de performance provenant du premier service comprend une entité de données opaque.

11. Agencement de surveillance logicielle (100) selon l'une quelconque des revendications précédentes, dans lequel la première mesure de performance est au moins un sous-ensemble de la deuxième mesure de performance.

12. Agencement de surveillance logicielle (100) selon l'une quelconque des revendications précédentes, dans lequel le contrôleur (101) est en outre configuré pour
réserver des ressources de calcul en fonction de la capacité de secours au pool de secours (206) de ressources de calcul permettant au contrôleur de capacité en direct (210) d'attribuer une augmentation de la partie des ressources de calcul (205) aux un ou plusieurs services (215).

13. Procédé de surveillance logicielle automatisée d'un système logiciel comprenant
une ou plusieurs ressources de calcul configurées pour exécuter un ou plusieurs services, chacun utilisant une partie des une ou plusieurs ressources de calcul, un contrôleur de capacité en direct configuré pour recevoir une ou plusieurs premières métriques de performance à partir des un ou plusieurs services et pour attribuer une partie des ressources de calcul aux services en fonction des premières métriques de performance, et un contrôleur, **caractérisé en ce que** le procédé comprend :
la réception (310) par le contrôleur des deuxièmes métriques de performance (PM) ;
la détermination (320) par le contrôleur d'un état prédit (221') du système logiciel (200) sur la base des deuxièmes métriques de performance (PM) ;
la détermination (330) par le contrôleur d'une capacité de secours (222') sur la base de l'état prédit (221'), dans lequel la détermination d'une capacité de secours implique la surveillance des performances du système logiciel (200) et la prédiction d'un état futur du système logiciel (200) représentant les exigences d'au moins certains des services (215) du système logiciel (200) ; et
la réservation (340) par le contrôleur de ressources de calcul en fonction de la capacité de secours à un pool de secours (206) de ressources de calcul permettant au contrôleur de capacité en direct (210) d'attribuer une modification de la partie des ressources de calcul (205) aux un ou plusieurs services (215) à partir du pool de secours (206), dans lequel le pool de secours (206) est utilisé pour réserver la capacité nécessaire à l'avance, dans lequel le contrôleur de capacité en direct (210) est un contrôleur de capacité en temps réel (210) qui surveille les services en temps réel, et dans lequel l'activation du contrôleur de capacité en direct (210) implique l'attribution rapide et efficace de toute modification de la partie attribuée de ressources de calcul (205) à tout service (215) à partir du pool de secours (206) de ressources de calcul.

14. Support lisible par ordinateur (120) comprenant des instructions informatiques (121) qui, lorsqu'elles sont exécutées par un contrôleur (101) d'un système de surveillance logicielle (100) selon la revendication 1, amènent le système de surveillance logicielle (100) à réaliser le procédé selon la revendication 13.
